# EUROPEAN PATENT APPLICATION

(11) **EP 4 679 386 A1**
(43) Date of publication of application: **14.01.2026**
(21) Application number: 24188120.0
(22) Date of filing: 11.07.2024
(51) Int. Cl.: G06V 20/59

(54) **COMPUTER IMPLEMENTED METHOD FOR MONITORING OF AN INTERIOR OF A VEHICLE USING A CAMERA**

(71) Applicant: Aptiv Technologies AG, 8200 Schaffhausen (CH)
(72) Inventor: Meinert, Christof, 8200 Schaffhausen (CH); Barth, Alexander, 8200 Schaffhausen (CH)
(74) Representative: Manitz Finsterwald Patent- und Rechtsanwaltspartnerschaft mbB

(57) **Abstract**

Computer implemented method for monitoring of an interior of a vehicle (10) using a camera (30), wherein the camera (30) is arranged and used for monitoring at least a part of a front-seat area (12) of a vehicle (10), and wherein a mirror element (40) facing the camera (30) is arranged in a rear-seat area (14) of the vehicle (10). Further, the present disclosure relates to a computer system (14), the computer system (14) being configured to carry out the said computer implemented method. Additionally, the present disclosure relates to a 10 non-transitory computer readable medium comprising instructions for carrying out said computer implemented method.

## Description

### FIELD

The present disclosure relates to a computer implemented method for monitoring of an interior of a vehicle using a camera, wherein the camera is arranged and used for monitoring at least a part of a front-seat area of a vehicle, and wherein a mirror element facing the camera is arranged in a rear-seat area of the vehicle. Further, the present disclosure relates to a computer system, the computer system being configured to carry out the said computer implemented method. Additionally, the present disclosure relates to a non-transitory computer readable medium comprising instructions for carrying out said computer implemented method

### BACKGROUND

In modern vehicles, monitoring of an interior of the vehicle is often provided and implemented. Cameras capturing images for said monitoring can be for instance arranged inside or in close proximity to a rear-view mirror of the vehicle. Especially monitoring the driver of the vehicle, exemplarily for determining a line of vision of the driver and/or signs of fatigue shown by the driver, may be implemented.

However, as the camera used for said monitoring, in particular monitoring the driver of the vehicle, is accordingly arranged for these tasks within the vehicle in a front row seat area, other areas of the vehicle, in particular a rear-seat area, are at least partly obstructed. This is caused by that a direct line of sight of the camera into said obstructed areas is blocked, for instance by the front-seats. Exemplarily, a footwell of the rear-seat row behind the front-seats and in particular a child in a rear facing child seat, are in most of the cases not visible for the camera.

Accordingly, there is a need to improve methods for monitoring an interior of the vehicle for solving the aforementioned drawbacks of the according methods known in the state of the art. In particular, there is a need to provide a method for monitoring an interior of the vehicle, in which the areas within the vehicle accessible for said monitoring is enlarged.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for monitoring of an interior of a vehicle using a camera, wherein the camera is arranged and used for monitoring at least a part of a front-seat area of a vehicle, and wherein a mirror element facing the camera is arranged in a rear-seat area of the vehicle,
the method comprising the steps of:
a) Capturing images with the camera,
b) Detecting the mirror element in the images captured in step a),
c) Determining a position and/or an orientation of the mirror element detected in step b),
d) Determining an image reflected by the mirror element as a partial image in the images captured in step a), and
e) Extending the area monitored by the camera by the partial image identified in step d).

The intention of the method is to extend and thereby enlarge an area accessible for monitoring within a vehicle. The method is carried out mainly with and/or by elements already present in modern vehicles.

In particular, a camera already used for monitoring a front-row seat area of the vehicle, including but not limited to the driver of the vehicle, is used for capturing images for said monitoring. Images in the present disclosure are understood as digital images, both still images but preferred videos, captured by a respective digital camera.

Said camera can be for instance an NIR, an RGB-IR, an RGB or any other imaging sensor that can acquire 2D images or image sequences of the interior of the vehicle. The camera can be equipped with active IR illumination (e.g. VCSEL, LED at 940nm, 850nm, or other wavelengths in IR spectrum). Further, the camera can be a depth sensing camera, for instance a structured light camera, a time of flight camera, or a stereo camera.

It is to be noted that in the sense of the present disclosure, a camera can also be understood as a system comprising two or more cameras. In other words, in step a) one or more cameras can be used for capturing the images.

Further, a mirror element also often already present in the vehicle is used during carrying out the method. Such mirrors are also known and often used in modern vehicles. A common field of application for additional mirror elements arranged in a rear-seat area of vehicles is after installing a rear facing child seat in the rear-seat row of the vehicle. Such rear facing child seats often are legally required for babies and children under a certain age and/or size. Together with the rear-view mirror, an additional mirror element, for instance arranged at a head rest of one of the rear seats, allows the driver to see the face of a child in said rear facing child seat.

It is to be noted that the electrical components, in particular the camera, but if applicable also display units, actuators, speakers, and other suitable devices, are electronically coupled to a processing unit of a computer system, which controls the respective devices and which carries out the steps of the present method.

In a first step a) of the method according to the present disclosure, images are captured with the camera. Said images can be single images. However, preferably said images are captured as a video or at least as a stream of still images with a repetition rate of 0.25 Hz or higher, for allowing a continuous monitoring.

As mentioned above, the camera is arranged and used for monitoring at least a part of a front-seat area of a vehicle, in particular the driver. Hence, especially for ensuring a view of the head and/or the face of the driver, said camera may be preferably arranged within or at least in the vicinity of the rear-view mirror, with a field of view into the interior of the vehicle, in most of the cases towards the rear-seat area. However, also other locations for arranging the camera within the vehicle are possible, for instance in a roof module and/or an overhead console, in a center stack display on top of the dashboard of the vehicle, or in the A-console of the vehicle.

This allows in the following step b) of the method according to the present disclosure to detect the mirror element in the images captured in step a). As mentioned above, the camera preferably comprises a field of view opened towards the rear-seat area, and the additional mirror element, for instance provided for allowing the above-described view of a child in a rear facing child seat, in turn faces the camera. In other words, the additional mirror element is included in the captured images and hence can be detected and identified. In summary, after step b) of the method according to the present disclosure an information is provided that an additional mirror is present within the interior of the vehicle.

Based on the information of an additional mirror element, in the following step c) of the method according to the present disclosure a position and/or an orientation of said detected additional mirror element is determined. Preferably, both the position and the orientation are determined. At first when detected, the part of the image showing the additional mirror element is considered to be in the image plane of the camera linked to its direct line of sight. However, as the additional mirror element shows a reflection, a determination of its position and especially of its orientation, in particular with respect to the camera, allows reconstruction of the original origin of the reflection shown by the additional mirror element.

It is to be noted that step b) and step c) can be carried out simultaneously or combined as a single step, in which detection and determination of position and/or orientation of the additional mirror element is combined.

Based on the determination of the position and/or orientation of the additional mirror element in step c) it is rendered possible in the next step d) to determine an image reflected by the mirror element as a partial image in the images captured in step a). For this determination, also provided data of the additional mirror element such as for instance a presence and a thickness of a frame of the additional mirror element, can be considered. In other words, after step d) information is provided that the reflection of the additional mirror element comprises additional data, namely that said partial image origins not from the additional mirror element itself, but is a reflection from a different area within the interior of the vehicle.

Within said determined partial image, preferably an obstructed area is identified, in particular in an additional step of the method according to the present disclosure. An obstructed area in the sense of the present disclosure is an area of the interior of the vehicle which lacks a direct line of sight from the camera, in other words, the obstructed area is not visible in images of the camera, at least without any aids such as the additional mirror element. However, from the point of view of the camera the additional mirror element deflects the line of sight of the camera, and the obstructed area becomes accessible for the camera as reflection. In summary, after identifying an obstructed area information is provided that said obstructed area is now visible to the camera, provided by the reflection of the additional mirror element.

It is to be noted that step d) and said identification of an obstructed area can be carried out simultaneously or combined as a single step, in which determination of the image reflected by the additional mirror element as partial image and the identification of the obstructed area within said partial image is combined.

As final step e) of the method according to the present disclosure, the area monitored by the camera is extended by the partial image identified in the previous step d). If applicable, if one or more obstructed areas are identified, one or more, preferably all, of said identified obstructed areas can also be added to the monitored areas. In other words, after step e) monitoring also of the partial image is possible. Thereby, the area within the vehicle accessible for monitoring is enlarged. As the partial image is identified to origin from a reflection of the additional mirror element, the monitoring preferably can be provided in an accordingly adapted way, in particular differently for the identified partial image. Exemplarily, but not limiting, monitoring a child in a rear facing child seat can be rendered possible using the already installed camera for driver monitoring, although a direct line of sight of said camera to the respective child is blocked.

It is to be noted that it can be considered for the monitoring that the partial image origins as reflection from the additional mirror element and hence is mirror inverted.

According to an embodiment of the computer implemented method according to the present disclosure, in step b) for detecting the mirror element and/or in step c) for determining the position and/or the orientation of the mirror element an information about a geometrical shape of the mirror element may be used. Said information can for instance encompass a general geometrical shape of the mirror element such as square, rectangle, hexagon, circle, ellipse. Also, a number of corners and/or their relative position can be part of said information. Likewise, a diameter, a circle radius, minor and major half-axis, or bending radii of corners and/or sides of the mirror element may be provided as information about a geometrical shape of the mirror element.

For the detection and/or determination, suitable algorithms, in particular based on neural networks, may be used. For the detection of the mirror element, the algorithm can use the provided information and search within the captured images for regions fitting the provided information, which seem to somehow interrupt the surrounding image due to the reflection of the mirror element. For the determination of the position and especially of the orientation of the mirror element, the provided information of the geometrical shape can be used for identifying a tilt of the mirror element with respect to the optical axis of the camera. This defines both, the position and the orientation of the mirror element with respect to the camera. As the camera in most of the cases comprises a known position and orientation within the vehicles, also the position and orientation of the mirror element can be determined.

For both cases, if an algorithm based on a neural network is used, said neural network preferably is trained with training images encompassing displayed mirrors. In particular, this will be performed as supervised learning. During development time, the model of the neural network may be trained on a set of common mirror surfaces. There are ways to refine the model later for a specific mirror surface, e.g. by adapting the model parameters if some sample data from the new mirror is available, or a corresponding 3D model based on which synthetic training data could be generated.

Preferably, for said detection and/or determination, one of the following neural network models can be used:
- YOLO (You Only Look Once),
- SSD (Single Shot Detector),
- Faster R-CNN (Region-based Convolutional Neural Networks),
- Mask R-CNN,
- RetinaNet,
- Deformable Parts Model (DPM),
- OverFeat,
- R-FCN (Region-based Fully Convolutional Networks),
- DSOD (Deeply Supervised Object Detector),
- CornerNet,
- SqueezeDet,
- Pelee, or
- Grid R-CNN.

This list is not closed, and also other suitable neural network models can be used.

According to an embodiment of the computer implemented method according to the present disclosure, in step b) for detecting the mirror element and/or in step c) for determining the position and/or the orientation of the mirror element the captured image may be analyzed using an object detector algorithm capable of distinguishing between detected objects with a direct line of sight to the camera and detected objects reflected by the mirror element. In particular, based on size constraints and/or potential distortions caused by the mirror surface said object detector algorithm can identify regions in the captured image which differ from their surroundings in the captured image. These differences can be used for both detecting the additional mirror element, and for determining a position and/or orientation of said mirror element, respectively. Said distortions can for instance be caused by a tilt of the mirror element with respect to an optical axis of the camera, but also by a three-dimensional shape of the mirror element itself, especially if the mirror element comprises a curved reflecting surface.

According to an embodiment of the computer implemented method according to the present disclosure, monitoring of the interior of the vehicle may include displaying the captured images. In addition to an automatic monitoring, in which the captured images are analyzed by algorithms for instance for determining a line of vision of the driver and/or signs of fatigue shown by the driver, according to the present disclosure the expression "monitoring" also encompasses displaying the captured images. Thereby, the captured images including the partial image, and if applicable the one or more obstructed areas, are made visible, especially for instance for the driver of the vehicle. In the example of a child in the rear facing child seat, the driver can see the child during driving in particular without turning his head, which is not only very convenient but also enhances driving safety.

However, a display of parts of the captured image is not limited to the partial image or an obstructed area. For instance, if there is another display in the rear-seat area of the vehicle, preferably a display that can be observed by the child, then also cropping an image region of the camera showing a driver's face and showing it on the display visible to the child is possible. This example is however not limiting, the same may for instance also be provided for a person sitting in the front passenger seat. In addition, said possibilities might be selectable in an according configuration of the camera and/or display. Further, said display can even be combined with the mirror surface of the additional mirror element.

According to an enhanced embodiment of the computer implemented method according to the present disclosure, in the displayed captured images the partial image may be marked and/or framed and/or set alone. If applicable, also the one or more obstructed area can be marked and/or framed and/or set alone. An identification of the partial image can be simplified. Marking the partial image may be provided by arrows and/or by artificially enlarging the partial image within the displayed image. Framing can be provided by surrounding the partial image with frames in suitably selected colors and/or styles. By setting alone the partial image, only this part of the captured image is displayed. If applicable, all these measures can also be applied to the respective one or more obstructed areas.

According to an enhanced embodiment of the computer implemented method according to the present disclosure, in the captured images may be displayed on one or more of the following displays:
- internal display,
- HUD,
- smart mirror,
- external display,
- mobile device.

This list is not closed and also other suitable display devices may be used. Internal displays, and especially a head-up display (HUD), are displays already provided in the respective vehicle. A smart mirror, in particular a smart mirror with an integrated display device, can also already be implemented in the vehicle, for instance as a rear-view mirror, which additionally can display the extended view of a rear-view camera. An external display, for instance a suitable monitor, may be connected to the vehicle, in particular by wire, but also wireless connecting modes like IR, Bluetooth, wireless LAN or other. In particular, also a mobile device may be used for displaying the captured images, which may allow a remote surveillance of the interior of the vehicle.

According to an enhanced embodiment of the computer implemented method according to the present disclosure, wherein the displayed captured images are processed for reducing and/or eliminating a distortion caused by the mirror element. As already mentioned above, the mirror element may cause distortions within the reflected image, not only caused by a tilt between the reflecting surface of the mirror element and an optical axis of the camera, but in particular caused by the three-dimensional shape of the reflecting surface of the mirror element. In particular, said reflecting surface often may comprise a curved shape for enlarging the field of view covered by the mirror element. By processing the displayed captured image for a reduction, preferred for an elimination, of distortions caused by the mirror element, a recognition of the displayed objects and/or persons by a viewer of the displayed captured images can be enhanced.

According to an enhanced embodiment of the computer implemented method according to the present disclosure, processing the displayed captured images may be based on considering a three-dimensional shape of the mirror element and/or by comparing detected objects reflected by the mirror element with undistorted images of said objects and/or standardized objects of the same kind. As mentioned above, the three-dimensional shape may cause distortions of the displayed captured image, especially in the partial image which is based on the reflections of the mirror element. If said three-dimensional shape is known, this information can be used when processing the distorted parts of the captured images, as said distortions generally follow the laws of geometric optics. Alternatively, or additionally, also a comparison of detected objects reflected by the mirror element with undistorted images of said objects and/or standardized objects of the same kind can be used for identifying and processing said distortions. For instance, a face of a child in a rear-facing child seat can be identified in the partial image, and beforehand the algorithm for processing the images can be trained with undistorted images of said child. Alternatively, or additionally, also standard representations of objects and/or persons can be used for said comparison. For instance, known aspect ratios of object shapes and/or relative length ratios of facial features can be used.

According to an embodiment of the computer implemented method according to the present disclosure, monitoring of the partial image may include one or more of the following actions:
- face detection
- child detection
- object detection
- child seat detection
- motion detection

This list is not closed, and also other suitable monitoring actions can be applied also to the partial image. In particular, all monitoring actions known concerning automotive applications can also be applied to the partial image. A complete and comprehensive monitoring and/or surveillance also of the respective partial image can thereby be provided. If applicable, the monitoring can likewise also be applied to identified obstructed areas.

According to an embodiment of the computer implemented method according to the present disclosure, if during identifying the partial image in step d) a discrepancy between the identified partial image and an intended partial image is identified, an alignment process of the position and/or orientation of the mirror element may be suggested and/or carried out based on the identified discrepancy. In most of the cases, the mirror arranged in the rear-seat area of the vehicle is installed for certain reasons, for instance for providing a view of a child in a rear facing child seat for the driver via the rear-view mirror. Hence, there is an intention, what area of the vehicle should be visible by the reflection provided by the additional mirror element. In other words, an intended partial image is defined, and the additional mirror element is installed for providing a reflection, and hence a partial image in the field of view of the camera, which allows a view into said intended area of the vehicle. However, as said additional mirror elements are also often installed by hand, at first a misalignment of the mirror element can often be not avoided. By identifying a discrepancy between the identified partial image and an intended partial image, and by subsequently suggesting an alignment process of the position and/or orientation of the mirror element, the installation process can be supported and thereby simplified and shortened. If the additional mirror element is an active mirror with according internal actuators, in particular an additional mirror element pre-installed as part of the vehicle, said alignment process can even be carried out automatically.

According to an enhanced embodiment of the computer implemented method according to the present disclosure, the discrepancy between the identified partial image and an intended partial image may be repeatedly or continuously monitored during carrying out the alignment process, and audio feedback and/or video feedback may be provided based on said monitored discrepancy and/or based on changes of said monitored discrepancy. If any obstructed area is identified, a respective monitoring can also be provided for an intended obstructed area and the actually identified obstructed area. Especially for a manual alignment of the additional mirror element, a repeatedly carried out check is necessary, whether the actual position and orientation of the mirror element is correct. According to this embodiment of the method according to the present disclosure, this periodic check is carried out by the camera and the respective processing unit. These checks may result in identifying a discrepancy between the identified partial image and the intended partial image, wherein also instructions can be generated based on said identified discrepancy. In particular, said instructions can be provided as audio feedback and/or video feedback. An audio feedback in the sense of the present invention can for instance be provided as spoken instructions for suitable movements of the mirror element, and/or be provided as beep signals with accordingly adapted changes in tone height, volume and/or repetition rate. A video feedback can be provided on a display, for instance by showing arrows indicating the suitable movements of the mirror element.

For said audio and/or video feedback, suitable devices such as for instance speaker or displays already present in the respective vehicle can be used. Alternatively, ore additionally, the audio and/or video feedback can also be provided by an external device, such as for instance a mobile phone.

According to an enhanced embodiment of the computer implemented method according to the present disclosure, during measuring the discrepancy a field of view of a rear-view mirror for a driver of the vehicle may be considered. As mentioned above, said additional mirror element may be installed in the vehicle for providing a view for the driver via the rear-view mirror into obstructed areas, for instance for viewing a child in a rear facing child seat. By considering the field of view of a rear-view mirror for the driver, the above described alignment process not only provides the intended partial image for the monitoring, but additionally also ensures the intended view of the driver via the rear-view mirror into said obstructed area. For providing this, in particular features of the driver such as height and/or head position preferably can be considered. Said features can be for instance be derived by suitable algorithms based on data from interior cameras and/or other sensors present and implemented in the vehicle. As an example, a height of occupants of the vehicle, in particular of the driver, can be derived from images of 2D cameras, and also a 3D location of the head of the driver can determined based on said data. The areas of application of the method according to the present disclosure can thus be extended.

According to an enhanced embodiment of the computer implemented method according to the present disclosure, the rear-view mirror may be actively adjusted, preferably considering the use of the rear-view mirror for driving the vehicle as a framing condition. If applicable, additionally, of alternatively, also an active adjustment of the rear-view mirror, in particular rendered possible by suitable actuators of the rear-view mirror, can be implemented. For this the rear-view mirror is adjusted for providing a view of the driver via the rear-view mirror to the additional mirror element and further into an intended obstructed area. This can be provided for a single driver, but in particular for different drivers using the same vehicle. However, preferably the use of the rear-view mirror for driving the vehicle is considered as framing condition. By that, the main purpose of the rear-view mirror can be ensured. Preferably, an according feedback can be provided to the driver that the adjustment process of the rear-view mirror was carried out, either successful or not successful.

In another aspect, the present disclosure is directed at a computer system, said computer system being configured to carry out several or all steps of the computer implemented method described herein. The computer system may be part of the vehicle. Additionally, or alternatively, the computer system may also be part of a mobile device such as a mobile phone.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: The method according to the present disclosure, and
- Fig. 2: A schematic view of the interior of a vehicle.

### DETAILED DESCRIPTION

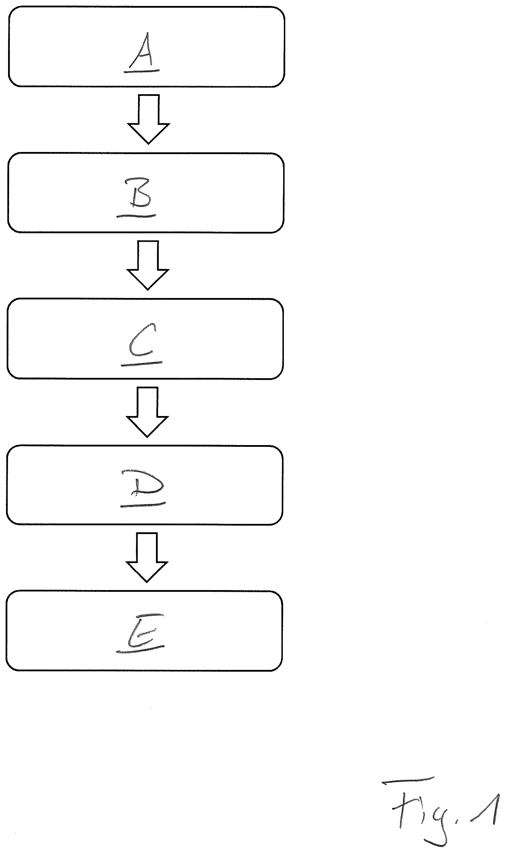

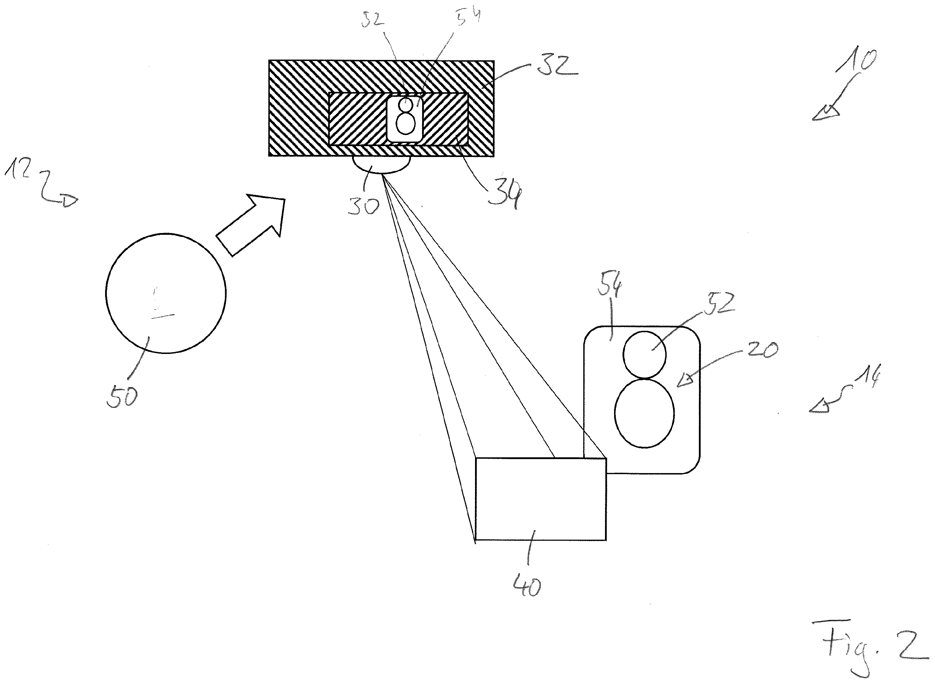

Fig. 1 depicts a schematic representation of the method according to the present disclosure, carried out by a computer system provided in a vehicle 10 (see Fig. 2).

Fig. 2 schematically shows the interior of a vehicle 10. A driver 50 is located in a front-seat area 12 of the vehicle 10. In the rear-seat area 14 of the vehicle 10, a rear facing child seat 54 is arranged, and a child 52 sits in said child seat 54. A direct line of sight for both the driver 50 and a camera 30 arranged at a rear-view mirror 32 to the child 52 is blocked. In other words, the child 52 sits in an obstructed area 20 for the driver 50.

For providing a view to the child 52 for the driver 50, an additional mirror element 30 is arranged in the rear-seat area 14. The mirror element 30 is positioned and arranged such that a reflection 34 of the mirror element 30 is visible for the driver 50 in the rear-view mirror 32.

In the following, the method according to the present disclosure is described referring to Fig. 1 and 2. In summary, the method according to the present disclosure enhances the possibilities for monitoring an interior of the vehicle 10 by identifying and subsequently using and integrating an additional mirror element 40 arranged in a rear-seat area 14 of the vehicle 10 (see Fig. 2).

The method can be carried out by a computer system according to the present disclosure. The computer system may be part of the vehicle 10. Additionally, or alternatively, the computer system may also be part of a mobile device such as a mobile phone. Instructions for carrying out several or all steps or aspects of the computer implemented method according to the present disclosure can be stored on a non-transitory computer readable medium comprising according to the present disclosure.

In a first step a) A of the method according to the present disclosure, images are captured with the camera 30. Said camera 30 can be for instance an NIR, an RGB-IR, an RGB or any other imaging sensor that can acquire 2D images or image sequences of the interior of the vehicle. The camera 30 can be equipped with active IR illumination (e.g. VCSEL, LED at 940nm, 850nm, or other wavelengths in IR spectrum). Further, the camera 30 can be a depth sensing camera, for instance a structured light camera, a time of flight camera, or a stereo camera.

As the camera 30 preferably is arranged at or at least in the vicinity of the rear-view mirror 32, the field of view of camera 30 covers the interior of the vehicle 10. However, blocked for instance by front seats, and, as depicted, also by a rear facing child seat 54, into some areas of the interior of the vehicle 30 there is no direct line of sight for the camera 30, in other words, there are obstructed areas 20.

As mentioned above, the method according to the present disclosure takes advantage of the additional mirror element 40 arranged in the rear-seat area 14 of the vehicle 10. Therefore, in the next step b) B said mirror element 40 is detected in the images captured by the camera 30 is step a) A, and in the subsequent step c) C a position and/or an orientation of the detected mirror element 40 is determined. Said detection and determination of position and/or orientation of the mirror element 40 can be based on an information about a geometrical shape of the mirror element 40, such as for example number and/or relative position of corners, bending radii and similar features. Alternatively, or additionally, also an analysis of the captured image can be carried out using an object detector algorithm capable of distinguishing between detected objects with a direct line of sight to the camera 30 and detected objects reflected by the mirror element 40.

Based on now available information about the position and/or orientation of the additional mirror element 40, in the next step d) D of the method according to the present disclosure an image reflected by the mirror element 40 is determined as a partial image in the images captured in step a) A. For this determination, also provided data of the additional mirror element 40 such as for instance a presence and a thickness of a frame of the additional mirror element 40, can be considered. In other words, after step d) D information is provided that the reflection of the additional mirror element 40 comprises additional data, namely that said partial image origins not from the additional mirror element 40 itself, but is a reflection from a different area within the interior of the vehicle 10.

However, some parts of the partial image show areas in the vehicle 10, which already comprise a direct line of sight with respect to the camera 30. Hence, preferably one or more obstructed areas 20 can be identified, which lack such a direct line of sight and therefore are otherwise not visible for the camera 40.

In the final step e) E of the method according to the present disclosure, the monitoring provided based on the images captured by the camera 30, for instance for determining a line of vision of the driver 40 and/or signs of fatigue shown by the driver 40, is extended by and into the partial image identified in previous step d) D. If any obstructed area 20 is identified in said partial image, the monitoring can also be explicitly extended and accordingly adapted to said obstructed area 20. In the example depicted in Fig. 2, by implementing the method according to the present disclosure the monitoring can hence also be provided for monitoring the child 52 in the rear facing child seat 54, although there is no direct line of sight for the camera 30.

Monitoring in the sense of the present disclosure can also encompass displaying the captured images, wherein preferably the partial images originating from the additional mirror element 40 and/or, if applicable, the identified obstructed areas 20 are marked and/or framed and/or set alone. Said displaying can be provided on internal display devices already present in the vehicle 10, but additionally, or alternatively, also on external devices such as monitors or even mobile phones. Monitoring in the sense of the present disclosure may encompass in particular one of face detection, child 52 detection, object detection, child seat 54 detection, or motion detection.

As the additional mirror element 40 may not only be tilted with respect to an optical axis of the camera 30, but often comprises a curved reflective surface for enhancing a field of view covered by the mirror element 40, the image reflected by the mirror element 40 may comprise distortions. Preferably, the method according to the present disclure includes processing said images for reducing, in particular eliminating, said distortions. This can be for instance provided by considering a three-dimensional shape of the mirror element 40 and/or by comparing detected objects reflected by the mirror element 40 with undistorted images of said objects and/or standardized objects of the same kind.

Finally, as described in the beginning, said mirror element 40 may be installed in the vehicle 10 by the user of the vehicle 10 itself. Independent of the person actually entrusted with this task, the method according to the present disclosure can also be used for supporting said installation procedure.

For that, the method according to the present disclosure is carried out and if during identifying the partial image in step d) D a discrepancy between the identified partial image and an intended partial image, for instance as depicted in Fig. 2 for providing a view to the child 52 in the rear facing child seat 54, is identified, an alignment process of the position and/or orientation of the mirror element 40 is suggested and/or carried out based on the identified discrepancy.

The alignment process can be also supported by giving an audio or video feedback, for instance by giving instructions like "tilt up", "tilt down", "rotate left" or "rotate right". Said support can even be provided under consideration of a field of view of the rear-view mirror 32 for the driver 50 of the vehicle 10, resulting in the display of the reflection 34 of the mirror element 40 in the rear-view mirror 32 for the driver 50, as depicted in Fig. 2. If applicable, actuators of the rear-view mirror 32 can also be controlled for said adjustment, wherein preferably the use of the rear-view mirror 32 for driving the vehicle 10 is considered as a framing condition.

### Reference numeral list

- 10: vehicle
- 12: front-seat area
- 14: rear-seat area

- 20: obstructed area

- 30: camera
- 32: rear-view mirror
- 34: reflection of mirror element

- 40: mirror element

- 50: driver
- 52: child
- 54: child seat

- 60: image

- A: step a)
- B: step b)
- C: step c)
- D: step d)
- E: step e)

## Claims

1. Computer implemented method for monitoring of an interior of a vehicle (10) using a camera (30), wherein the camera (30) is arranged and used for monitoring at least a part of a front-seat area (12) of a vehicle (10), and wherein a mirror element (40) facing the camera (30) is arranged in a rear-seat area (14) of the vehicle (10),
the method comprising the steps of:
a) Capturing images with the camera (30),
b) Detecting the mirror element (40) in the images captured in step a) (A),
c) Determining a position and/or an orientation of the mirror element (40) detected in step b) (B),
d) Determining an image reflected by the mirror element (40) as a partial image in the images captured in step a) (A), and
e) Extending the area monitored by the camera (30) by the partial image identified in step d) (D).

2. The computer implemented method according to claim 1,
wherein in step b) (B) for detecting the mirror element (40) and/or in step c) (C) for determining the position and/or the orientation of the mirror element (40) an information about a geometrical shape of the mirror element (40) is used.

3. The computer implemented method according to claim 1 or 2,
wherein in step b) (B) for detecting the mirror element (40) and/or in step c) (C) for determining the position and/or the orientation of the mirror element (40) the captured image is analyzed using an object detector algorithm capable of distinguishing between detected objects with a direct line of sight to the camera (30) and detected objects reflected by the mirror element (40).

4. The computer implemented method according to one of the preceding claims,
wherein monitoring of the interior of the vehicle (10) includes displaying the captured images.

5. The computer implemented method according to claim 4,
wherein in the displayed captured images the partial image is marked and/or framed and/or set alone.

6. The computer implemented method according to claim 4 or 5,
wherein in the captured images are displayed on one or more of the following displays:
- internal display,
- HUD,
- smart mirror,
- external display,
- mobile device.

7. The computer implemented method according to one of the preceding claims 4 to 6,
wherein the displayed captured images are processed for reducing and/or eliminating a distortion caused by the mirror element (40).

8. The computer implemented method according to claim 7,
wherein processing the displayed captured images is based on considering a three-dimensional shape of the mirror element (40) and/or by comparing detected objects reflected by the mirror element (40) with undistorted images of said objects and/or standardized objects of the same kind.

9. The computer implemented method according to one of the preceding claims,
wherein monitoring of the partial image includes one or more of the following actions:
- face detection
- child (52) detection
- object detection
- child seat (54) detection
- motion detection

10. The computer implemented method according to one of the preceding claims,
wherein, if during identifying the partial image in step d) (D) a discrepancy between the identified partial image and an intended partial image is identified, an alignment process of the position and/or orientation of the mirror element (40) is suggested and/or carried out based on the identified discrepancy.

11. The computer implemented method according claim 10,
wherein the discrepancy between the identified partial image and an intended partial image is repeatedly or continuously monitored during carrying out the alignment process, and audio feedback and/or video feedback is provided based on said monitored discrepancy and/or based on changes of said monitored discrepancy.

12. The computer implemented method according to claim 10 or 11,
wherein during measuring the discrepancy a field of view of a rear-view mirror (32) for a driver (50) of the vehicle (10) is considered.

13. The computer implemented method according to claim 12,
wherein the rear-view mirror (32) is actively adjusted, preferably considering the use of the rear-view mirror (32) for driving the vehicle (10) as a framing condition.

14. Computer system, the computer system being configured to carry out the computer implemented method of at least one of claims 1 to 13.

15. Non-transitory computer readable medium comprising instructions for carrying out the computer implemented method of at least one of claims 1 to 13.
